# EUROPEAN PATENT SPECIFICATION

(11) **EP 1 781 058 B1**
(45) Date of publication and mention of the grant of the patent: **12.12.2007**
(21) Application number: 05110027.9
(22) Date of filing: 26.10.2005
(51) Int. Cl.: H04Q 7/38

(54) **Locating and identifying a person using a mobile device**
Lokalisierung und Identifizierung einer Person unter Verwendung eines mobilen Gerätes
Localiser et identifier une personne utilisant un appareil mobile

(43) Date of publication of application: 02.05.2007
(73) Proprietor: Research In Motion Limited, Waterloo, Ontario N2L 3W8 (CA)
(72) Inventor: Bayne, Ryan Mitchell, Waterloo, Ontario N2K 1S5 (CA)
(74) Representative: Rickard, David John

(56) References cited:
- WO-A-20/04012352
- US-A- 6 055 434
- US-A1- 2003 100 315
- US-A1- 2005 187 882

## Description

Transferable mobile communication devices, for example, walkie-talkies, may be picked up by employees for their use at the beginning of a shift and returned at the end of the shift. Some of these devices may include a global positioning system (GPS) receiver, and may therefore be able to calculate their location. Such a device may transmit information about its location to a server on a network so that the employer knows where the device is located. However, the employer may still not know which device is with which employee, and therefore will not know where each employee is located at any given time.

WO2004/012352 discusses a wireless mobile device with a smartcard reader for reading a smart card containing user identification data to be used for a financial transaction.

US65055434 discusses a system of beacons which transmit identification data that can be used by a receiving device to map its current location.

### GENERAL

According to one embodiment of the invention there is provided a mobile communication device as described in any of claims 1 to 3. According to another embodiment of the invention there is provided a system as described in any of claims 4 to 7. According to another embodiment of the invention there is provided a method as described in any of claims 8 and 9. According to yet another embodiment of the invention there is provided a computer program product as described in claim *10*.

A mobile device communicates wirelessly with a smart card reader to obtain identification of a person whose smart card is coupled to the smart card reader. The mobile device transmits the identification to a server via a network. The identification may be digitally signed by a certificate stored in the smart card. The mobile device also transmits information about its location to the server. The location information may be digitally signed by a certificate stored in the smart card. The identification and the location information may be transmitted together in a single transmission, or in separate transmissions. The server determines the identity and location of the person that is using the mobile device.

The mobile device may calculate its location using received global positioning system (GPS) signals. Alternatively, the location information may be other location information used by the server to determine the location of the mobile device. For example, the information may be information about the received signal strength at the mobile device of signals originating at access points in the network.

The communication of the mobile device and the smart card reader may be with a different wireless communication protocol than the communication of the mobile device and the network.

### BRIEF DESCRIPTION OF THE DRAWINGS

Embodiments are illustrated by way of example and not limitation in the figures of the accompanying drawings, in which like reference numerals indicate corresponding, analogous or similar elements, and in which:

Figure 1 is an illustration of an exemplary environment in which mobile communications devices are transferable among different users, and users have smart cards coupled to smart card readers, according to some embodiments;

Figure 2 is a schematic diagram of an exemplary system comprising a server coupled to a network, mobile communication devices, smart card readers and smart cards, according to some embodiments;

Figure 3 is a flowchart of an exemplary method for locating and identifying a user of a mobile communications device; and

Figure 4 is a block diagram of some components of the exemplary system of Figure 2, according to some embodiments.

It will be appreciated that for simplicity and clarity of illustration, elements shown in the figures have not necessarily been drawn to scale. For example, the dimensions of some of the elements may be exaggerated relative to other elements for clarity.

### DESCRIPTION OF PREFERRED EMBODIMENTS

In the following detailed description, numerous specific details are set forth in order to provide a thorough understanding of the embodiments. However it will be understood by those of ordinary skill in the art that the embodiments may be practiced without these specific details. In other instances, well-known methods, procedures, components and circuits have not been described in detail so as not to obscure the embodiments.

In some situations, mobile communication devices may be transferable among different users. For example, an employee may take a mobile communication device from a common pool at the start of a shift and return it at the end of the shift, at which point the device is available to be taken by a different employee. A non-exhaustive list of examples of such situations includes employees in amusement parks, security guards at a stadium or shopping mall, employees in a large hospital, park rangers, police officers and/or other emergency personnel and the like.

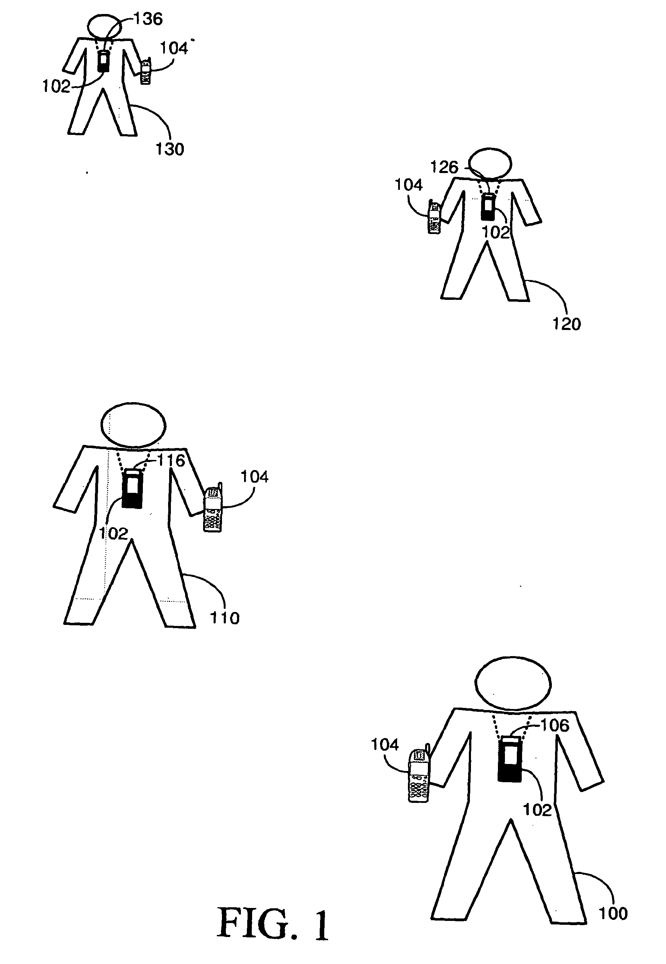

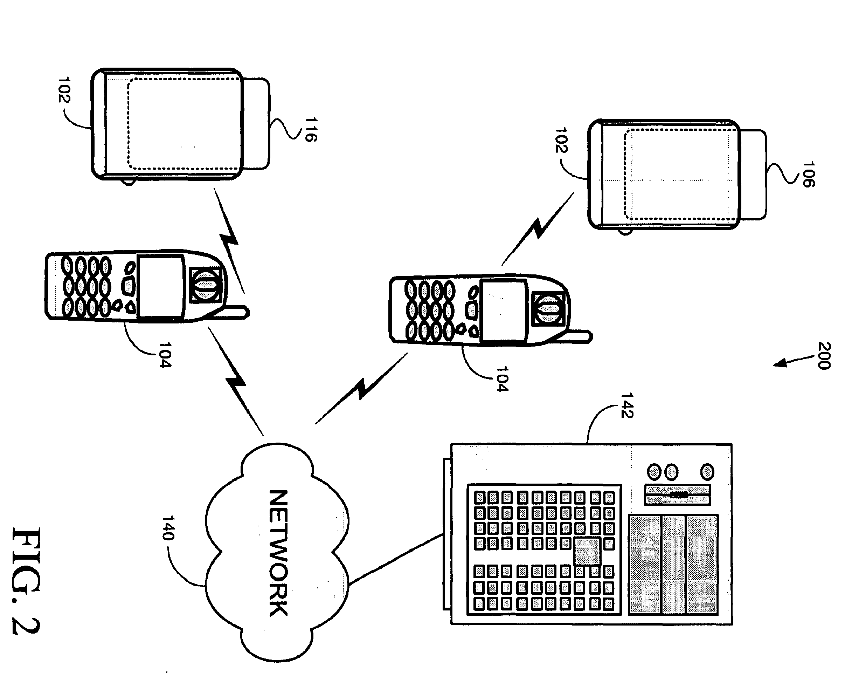

Figure 1 is an illustration of an exemplary environment in which mobile communications devices are transferable among different users, and users have smart cards coupled to smart card readers, according to some embodiments. Figure 2 is a schematic diagram of an exemplary system 200 used in such environments, according to some embodiments.

Four employees are shown in Figure 1 at various locations in their place of employment, for example, a theme park. Employees 100, 110, 120 and 130 each have a smart card reader 102 and a mobile communication device 104. Employee 100 has a smart card 106 coupled to smart card reader 102. Similarly, employees 110, 120 and 130 have respective smart cards 116, 126 and 136 coupled to their smart card readers.

At the beginning of the shift, employee 100 picked up a particular mobile device from the common pool, while employee 110 picked up another mobile device from the common pool. The mobile device picked up by employee 100 may be the same as or different from the mobile device picked up by employee 110. In general, there is nothing about the mobile device that uniquely identifies the employee that is currently using it.

Smart cards 106, 116, 126 and 136 store identifying data of employees 100, 110, 120 and 130, respectively. Smart cards are personalized security devices, defined by the ISO7816 standard and its derivatives, as published by the International Organization for Standardization. A smart card may have a form factor of a credit card and may include a semiconductor device. The semiconductor device may include a memory that can be programmed with security information (e.g., a private decryption key, a private signing key, biometrics, etc.) and may include a processor and/or dedicated logic, for example, dedicated decryption logic and/or dedicated signing logic. A smart card may include a connector for powering the semiconductor device and performing serial communication with an external device. Alternatively, smart card functionality may be embedded in a device having a different form factor and different communication protocol, for example a Universal Serial Bus (USB) device. A smart card may also include a random number generator. A smart card may be used for visual identification, time cards, door access, and the like.

Smart card readers 102 may be able to communicate wirelessly with mobile devices 104 using a first wireless communication protocol. A non-exhaustive list of examples of the first wireless communication protocol includes the Bluetooth® protocol, the ultra wideband (UWB) protocol, the ZigBee^{™} protocol and the like.

Mobile devices 104 may be able to communicate with a network 140 using a second, different, wireless communication protocol. A non-exhaustive list of examples of the second wireless communication protocol includes cellular telephone protocols, wireless local area network (WLAN) protocols such as IEEE 802.11, and the like.

A server 142 is coupled to network 140. Server 142 may be able to identify the locations of mobile devices 104. For example, if mobile devices 104 communicate with network 140 using a WLAN protocol, server 142 may be able to calculate the location of a particular mobile device 104 from the locations of access points and from information about the received signal strength at the particular mobile device 104 of signals originating at the access points. In another example, a mobile device 104 may include a global positioning system (GPS) receiver that calculates the location of the mobile device using GPS signals received by the mobile device.

Suppose a guest of the theme park requires immediate emergency assistance. Server 142 may be able to identify which employees are located nearby (and therefore enable the appropriate employees to be instructed to assist the guest) if it has location information for mobile devices 104 and can determine which employees have which devices.

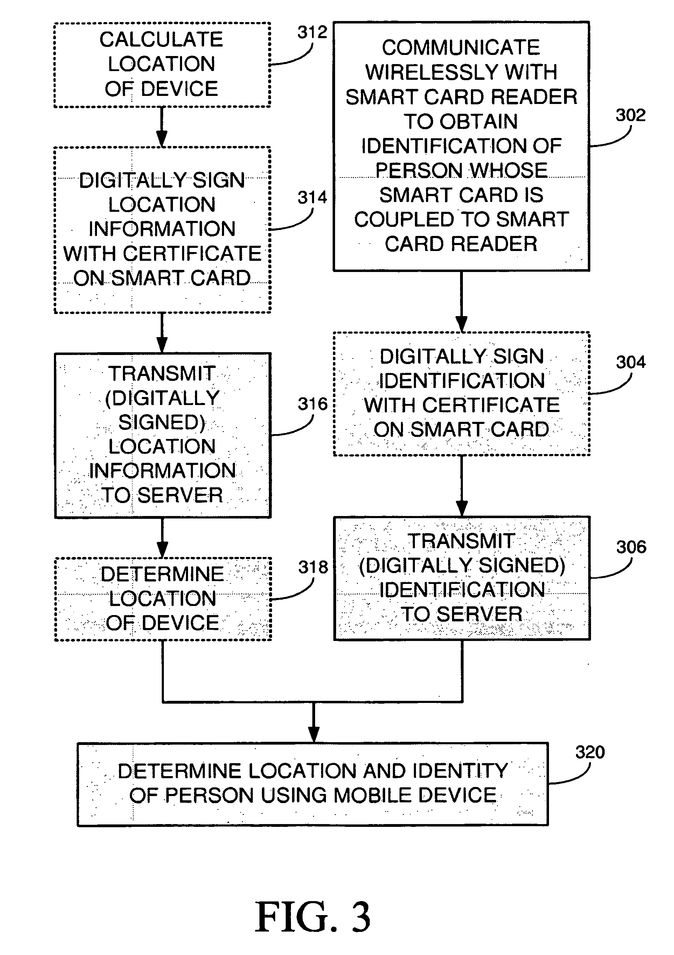

Figure 3 is a flowchart of an exemplary method for locating and identifying a user of a mobile communications device, according to some embodiments.

At 302, mobile device 104 communicates wirelessly with smart card reader 102 to obtain identification of the person whose smart card is coupled to smart card reader 102. For example, the mobile device 104 used by employee 100 communicates with the smart card reader 102 worn by employee 100 to obtain identification of employee 100 from smart card 106.

At 304, the identification of the person may be digitally signed by a certificate stored in smart card 106.

At 306, the identification of the person, possibly digitally signed, is transmitted from mobile device 104 to server 142 via network 140.

At 312, mobile device 104 may calculate its location, for example, using received GPS signals.

At 314, information related to the location of mobile device 104 may be digitally signed by the certificate stored in smart card 106.

At 316, the location information, possibly digitally signed, is transmitted from mobile device 104 to server 142 via network 140. The information related to the location may be an indication of the location calculated at 312. Alternatively, this information may be other location information used by server 142 to determine the location of mobile device 104. For example, the information may be information about the received signal strength at mobile device 104 of signals originating at access points in network 140, for example RSSI (received signal strength indication) information. In the latter case, at 318, server 142 may determine the location of mobile device 104 using the information transmitted at 316 and with other information available to server 142.

The location information may be transmitted together with the identification in a single transmission, or separately.

At 320, server 142 determines the location and identity of the person using mobile device 104 from the information transmitted at 306 and 316. The location of mobile device 104 determined at 312 or 318 is the location of the person using mobile device 104. It is assumed that the person using mobile device 104 is the person whose smart card is coupled to the smart card reader that communicates wirelessly with mobile device 104.

Digitally signing the identification information and/or the location information by the certificate stored in smart card 106 authenticates the information so that the recipient, server 142 in this case, is confident that the information originates at smart card 106. For example, to add a digital signature to the information being sent by mobile device 104, mobile device 104 may wirelessly communicate a hash of the contents of the information to smart card reader 102. Smart card reader 102 may pass the hash to smart card 106, which may produce a digital signature from the hash and the sender's private signing key, which is stored in smart card 106. Smart card 106 may then pass the digital signature to smart card reader 102, which may communicate it wirelessly to mobile device 104 so that mobile device 104 can transmit it along with the information. Smart card 106 may prevent unauthorized use of the recipient's private signing key by requiring that a password or PIN be supplied before allowing the signing operation to proceed. The wireless communication link between smart card reader 102 and mobile device 104 may be secured using cryptographic techniques.

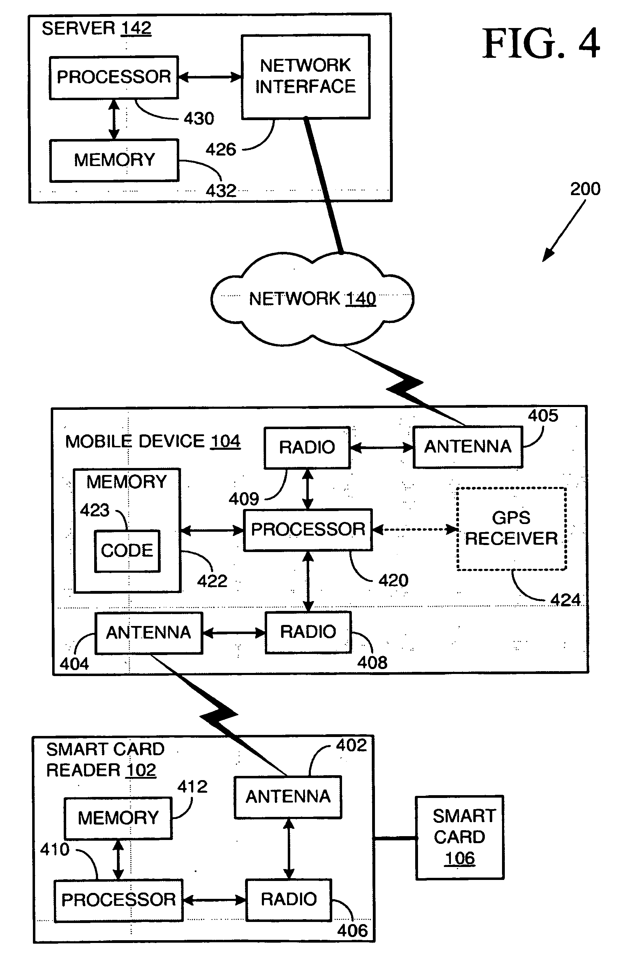

Figure 4 is a block diagram of some components of the exemplary system 200 of Figure 2. Smart card reader 102 includes an antenna 402 and mobile device 104 includes antennae 404 and 405. A non-exhaustive list of examples for antennae 402, 404 and 405 includes dipole antennae, monopole antennae, multilayer ceramic antennae, planar inverted-F antennae, loop antennae, shot antennae, dual antennae, omnidirectional antennae and any other suitable antennae.

Smart card reader 102 includes a radio 406 coupled to antenna 402, and mobile device 104 includes radios 408 and 409 coupled to antennae 404 and 405, respectively. Radios 406 and 408 are compatible with a first wireless communication protocol. Radio 409 is compatible with a second, different, wireless communication protocol. A non-exhaustive list of examples of the first wireless communication protocol includes the Bluetooth® protocol, the ultra wideband (UWB) protocol, the ZigBee^{™} protocol and the like. A non-exhaustive list of examples of the second wireless communication protocol includes cellular telephone protocols, wireless local area network (WLAN) protocols such as IEEE 802.11, and the like.

Smart card reader 102 also includes a processor 410 coupled to radio 406, and a memory 412, which may be fixed in or removable from smart card reader 102. Memory 412 may be embedded or partially embedded in processor 410. Processor 410 and memory 412 may be part of the same integrated circuit or in separate integrated circuits. Radio 406 and processor 410 may be part of the same integrated circuit or in separate integrated circuits.

Mobile device 104 also includes a processor 420 coupled to radios 408 and 409, and a memory 422, which may be fixed in or removable from mobile device 104. Memory 422 may be embedded or partially embedded in processor 420. Processor 420 and memory 422 may be part of the same integrated circuit or in separate integrated circuits. Processor 420 and one or more of radios 408 and 409 may be part of the same integrated circuit or in separate integrated circuits.

Mobile device 104 may include a GPS receiver 424 coupled to processor 420.

Server 142 includes a network interface 426, a processor 430 coupled to network interface 426, and a memory 432, which may be fixed in or removable from server 142. Memory 432 may be embedded or partially embedded in processor 430. Processor 430 and memory 432 may be part of the same integrated circuit or in separate integrated circuits. Processor 430 and network interface 426 may be part of the same integrated circuit or in separate integrated circuits.

A non-exhaustive list of examples for processors 410, 420 and 430 includes a central processing unit (CPU), a digital signal processor (DSP), a reduced instruction set computer (RISC), a complex instruction set computer (CISC) and the like. Furthermore, each of processors 410, 420 and 430 may be part of an application specific integrated circuit (ASIC) or may be a part of an application specific standard product (ASSP).

A non-exhaustive list of examples for memories 412, 422 and 432 includes any combination of the following:
a) semiconductor devices such as registers, latches, read only memory (ROM), mask ROM, electrically erasable programmable read only memory devices (EEPROM), flash memory devices, non-volatile random access memory devices (NVRAM), synchronous dynamic random access memory (SDRAM) devices, RAMBUS dynamic random access memory (RDRAM) devices, double data rate (DDR) memory devices, static random access memory (SRAM), universal serial bus (USB) removable memory, and the like;
b) optical devices, such as compact disk read only memory (CD ROM), and the like; and
c) magnetic devices, such as a hard disk, a floppy disk, a magnetic tape, and the like.

Memory 422 may store executable code 423 which, when executed by processor 420, may cause mobile device 104 to implement portions of the methods described hereinabove.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A mobile communication device (104) comprising:
a first radio (409) through which said device (104) is able to communicate with a network (140) using a first wireless communication protocol;
a second radio (408) through which said device (104) is able to communicate with a smart card reader (102) using a second, different, wireless communication protocol, said smart card reader (102) able to be coupled to a smart card (106) that stores identifying data of a person;
a processor (420); and
a memory (422) arranged to store executable code means (423) which, when executed by said processor (420), receives an identification of said person from said smart card reader through said second radio, transmits information related to a location of said device (104) through said first radio (409) to said network (140) and transmits said identification of said person through said first radio (409) to said network (140).

2. The mobile device (104) of claim 1, further comprising:
a global positioning system receiver (404) to calculate said location.

3. The mobile device (104) of claim 1 or claim 2, wherein said second communication protocol is a Bluetooth® protocol, an ultra wideband (UWB) protocol, or a ZigBee^{™} protocol, and/or wherein said first communication protocol is a wireless local area network protocol or a cellular telephony protocol.

4. A system (200) comprising:
a server (142) on a network (140);
two or more smart card readers (102), each able to be coupled to a smart card (106, 116, 126, 136) that stores identifying data of a person (100, 110, 120, 130); and
two or more mobile communication devices (104), each one of said devices comprising:
a first radio (409) through which said one of said devices (104) is able to communicate with said network (140) using a first wireless communication protocol;
a second radio (408) through which said one of said devices (104) is able to communicate with said smart card readers (102) using a second, different, wireless communication protocol;
a processor (420); and
a memory (422) to store executable code means (423) which, when executed by said processor (420), receives an identification of said person from one of said smart card readers through said second radio, transmits information related to a location of said one of said devices (104) through said first radio (409) to said server (142) and transmits said identification of said person (100, 110, 120, 130) through said first radio (409) to said server (142).

5. The system (200) of claim 4, wherein said one of said devices (104) further comprises a global positioning system receiver (424) to calculate said location.

6. The system (200) of claim 4, wherein said information related to said location is signal strength information from signals received by said one of said devices (104) over said network (140) and said server (142) calculates said location based on locations of access points in said network (140) and said signal strength information.

7. The system (200) of any one of claims 4 to 6, wherein said second communication protocol is a Bluetooth® protocol, an ultra wideband protocol, or a ZigBee^{™} protocol, and/or wherein said first communication protocol is a wireless local area network protocol or a cellular telephony protocol.

8. A method for identifying and locating a current user (100, 110, 120, 130) of a mobile communication device (104), the method comprising:
obtaining identification information about said current user (100, 110, 120, 130) over a first wireless communication link from a smart card reader (102) coupled to a smart card (106, 116, 126, 136) that stores identifying data of said current user (100, 110, 120, 130); and
transmitting said identification information and location information about said device (104) to a server (142) over a communication link, at least a portion of which is a second wireless communication link.

9. The method of claim 8, further comprising:
calculating said location information using global positioning system signals received by said device (104), and/or
digitally signing said location information prior to transmission using a certificate stored on said smart card (106, 116, 126, 136), and digitally signing said identification information prior to transmission using said certificate.

10. A computer program product comprising a computer readable medium (422) arranged to store executable code means (423) which, when executed by a processor (420) of a mobile communication device (104) implements the method of claim 8 or claim 9.

## Patentansprüche

1. Mobiles Kommunikationsgerät (104), umfassend:
eine erste Funkeinrichtung (409), durch die das Gerät (104) in der Lage ist, unter Verwendung eines ersten Drahtloskommunikationsprotokolls mit einem Netz (140) zu kommunizieren;
eine zweite Funkeinrichtung (408), durch die das Gerät (104) in der Lage ist, unter Verwendung eines zweiten, unterschiedlichen Drahtloskommunikationsprotokolls mit einem Smartcard-Leser (102) zu kommunizieren, wobei der Smartcard-Leser (102) mit einer Smartcard (106) gekoppelt werden kann, auf der Identifikationsdaten einer Person gespeichert sind;
einen Prozessor (420); und
einen Speicher (422), der zum Speichern von ausführbaren Codemitteln (423) eingerichtet ist, die bei ihrer Ausführung durch den Prozessor (420) bewirken, dass eine Identifikation der Person von dem Smartcard-Leser über die zweite Funkeinrichtung empfangen wird, dass Informationen im Zusammenhang mit einer Position des Geräts (104) über die erste Funkeinrichtung (409) zu dem Netz (140) übertragen werden und dass die Identifikation der Person über die erste Funkeinrichtung (409) zu dem Netz (140) übertragen wird.

2. Mobilgerät (104) gemäß Anspruch 1, des Weiteren umfassend:
einen GPS-Empfänger (Global Positioning System) (404) zum Berechnen der Position.

3. Mobilgerät (104) gemäß Anspruch 1 oder Anspruch 2, wobei das zweite Kommunikationsprotokoll ein Bluetooth®-Protokoll, ein UWB-Protokoll (Ultra Wideband) oder ein ZigBee^{™}-Protokoll ist und/oder wobei das erste Kommunikationsprotokoll ein WLAN-Protokoll (Wireless Local Area Network) oder ein Zellulartelefonieprotokoll ist.

4. System (200), umfassend:
einen Server (142) in einem Netz (140);
zwei oder mehrere Smartcard-Leser (102), von denen jedes mit einer Smartcard (106, 116, 126, 136) gekoppelt werden kann, auf der Identifikationsdaten einer Person (100, 110, 120, 130) gespeichert sind; und
zwei oder mehrere mobile Kommunikationsgeräte (104), wobei jedes der Geräte umfasst:
eine erste Funkeinrichtung (409), durch die das eine der Geräte (104) in der Lage ist, unter Verwendung eines ersten Drahtloskommunikationsprotokolls mit dem Netz (140) zu kommunizieren;
eine zweite Funkeinrichtung (408), durch die das eine der Geräte (104) in der Lage ist, unter Verwendung eines zweiten, unterschiedlichen Drahtloskommunikationsprotokolls mit den Smartcard-Lesern (102) zu kommunizieren;
einen Prozessor (420); und
einen Speicher (422) zum Speichern von ausführbaren Codemitteln (423), die bei ihrer Ausführung durch den Prozessor (420) bewirken, dass eine Identifikation der Person von einem der Smartcard-Leser über die zweite Funkeinrichtung empfangen wird, dass Informationen im Zusammenhang mit einer Position des einen der Geräte (104) über die erste Funkeinrichtung (409) zu dem Server (142) übertragen wird und dass die Identifikation der Person (100, 110, 120, 130) über die erste Funkeinrichtung (409) zu dem Server (142) übertragen wird.

5. System (200) gemäß Anspruch 4, wobei das eine der Geräte (104) des Weiteren einen GPS-Empfänger (General Positioning System) (424) zum Berechnen der Position umfasst.

6. System (200) gemäß Anspruch 4, wobei die Informationen im Zusammenhang mit der Position Signalstärke-Informationen aus Signalen sind, die durch das eine der Geräte (104) über das Netz (140) empfangen wurden, und wobei der Server (142) die Position auf der Basis von Positionen von Zugangspunkten in dem Netz (140) und der Signalstärke-Informationen berechnet.

7. System (200) gemäß jedem der Ansprüche 4 bis 6, wobei das zweite Kommunikationsprotokoll ein Bluetooth®-Protokoll, ein UWB-Protokoll (Ultra Wideband) oder ein ZigBee^{™}-Protokoll ist und/oder wobei das erste Kommunikationsprotokoll ein WLAN-Protokoll (Wireless Local Area Network) oder ein Zellulartelefonieprotokoll ist.

8. Verfahren zum Identifizieren und Lokalisieren eines aktuellen Benutzers (100, 110, 120, 130) eines mobilen Kommunikationsgeräts (104), wobei das Verfahren umfasst:
das Gewinnen von Identifikationsinformationen in Bezug auf den aktuellen Benutzer (100, 110, 120, 130) über eine erste Drahtloskommunikationsverbindung von einem Smartcard-Leser (102), das mit einer Smartcard (106, 116, 126,136) gekoppelt ist, auf der Identifikationsdaten des aktuellen Benutzers (100, 110, 120, 130) gespeichert sind; und
das Übertragen der Identifikationsinformationen und Positionsinformationen in Bezug auf das Gerät (104) zu einem Server (142) über eine Kommunikationsverbindung, von der mindestens ein Abschnitt eine zweite Drahtloskommunikationsverbindung ist.

9. Verfahren gemäß Anspruch 8, des Weiteren umfassend:
das Berechnen der Positionsinformationen unter Verwendung von GPS-Signalen (Global Positioning System), die durch das Gerät (104) empfangen wurden, und/oder
das digitale Signieren der Positionsinformationen vor der Übertragung unter Verwendung eines auf der Smartcard (106, 116, 126, 136) gespeicherten Zertifikats und das digitale Signieren der Identifikationsinformationen vor der Übertragung unter Verwendung des Zertifikats.

10. Computerprogrammprodukt, umfassend ein computerlesbares Medium (422), das zum Speichern von ausführbaren Codemitteln (423) eingerichtet ist, die bei ihrer Ausführung durch einen Prozessor (420) eines mobilen Kommunikationsgeräts (104) das Verfahren gemäß Anspruch 8 oder Anspruch 9 implementieren.

## Revendications

1. Un dispositif de communication mobile (104) comportant :
un premier émetteur-récepteur radio (409) par le biais duquel ledit dispositif (104) peut communiquer avec un réseau (140) à l'aide d'un premier protocole de communication sans fil ;
un deuxième émetteur-récepteur radio (408) par le biais duquel ledit dispositif (104) peut communiquer avec un lecteur de carte intelligente (102) à l'aide d'un deuxième protocole de communication sans fil différent, ledit lecteur de carte intelligente (102) pouvant être couplé à une carte intelligente (106) qui stocke des données d'identification d'une personne ;
un processeur (420) ; et
une mémoire (422) agencée afin de stocker un moyen de code exécutable (423) qui, quand il est exécuté par ledit processeur (420), reçoit une identification de ladite personne dudit lecteur de carte intelligente par le biais dudit deuxième émetteur-récepteur radio, transmet des informations liées à une localisation dudit dispositif (104) par le biais dudit premier émetteur-récepteur radio (409) au dit réseau (140) et transmet ladite identification de ladite personne par le biais dudit premier émetteur-récepteur radio (409) au dit réseau (140).

2. Le dispositif mobile (104) de la revendication 1, comportant de plus :
un récepteur de système mondial de positionnement (404) pour calculer ladite localisation.

3. Le dispositif mobile (104) de la revendication 1 ou de la revendication 2, dans lequel ledit deuxième protocole de communication est un protocole Bluetooth®, un protocole bande ultralarge (UWB), ou un protocole ZigBee^{™}, et/ou dans lequel ledit premier protocole de communication est un protocole de réseau local sans fil ou un protocole de téléphonie cellulaire.

4. Un système (200) comportant :
un serveur (142) sur un réseau (140) ;
deux lecteurs de carte intelligente ou plus (102), chacun pouvant être couplé à une carte intelligente (106, 116, 126, 136) qui stocke des données d'identification d'une personne (100, 110, 120, 130) ; et
deux dispositifs de communication mobile ou plus (104), chacun desdits dispositifs comportant :
un premier émetteur-récepteur radio (409) par le biais duquel ledit un desdits dispositifs (104) peut communiquer avec ledit réseau (140) à l'aide d'un premier protocole de communication sans fil ;
un deuxième émetteur-récepteur radio (408) par le biais duquel ledit un desdits dispositifs (104) peut communiquer avec lesdits lecteurs de carte intelligente (102) à l'aide d'un deuxième protocole de communication sans fil différent ;
un processeur (420) ; et
une mémoire (422) pour stocker un moyen de code exécutable (423) qui, quand il est exécuté par ledit processeur (420), reçoit une identification de ladite personne de l'un desdits lecteurs de carte intelligente par le biais dudit deuxième émetteur-récepteur radio, transmet des informations liées à une localisation dudit un desdits dispositifs (104) par le biais dudit premier émetteur-récepteur radio (409) au dit serveur (142) et transmet ladite identification de ladite personne (100, 110, 120, 130) par le biais dudit premier émetteur-récepteur radio (409) au dit serveur (142).

5. Le système (200) de la revendication 4, dans lequel ledit un desdits dispositifs (104) comporte de plus un récepteur de système mondial de positionnement (424) pour calculer ladite localisation.

6. Le système (200) de la revendication 4, dans lequel lesdites informations liées à ladite localisation sont des informations de force de signal de signaux reçus par ledit un desdits dispositifs (104) sur ledit réseau (140) et ledit serveur (142) calcule ladite localisation sur la base des localisations de points d'accès dans ledit réseau (140) et desdites informations de force de signal.

7. Le système (200) de n'importe laquelle des revendications 4 à 6, dans lequel ledit deuxième protocole de communication est un protocole Bluetooth®, un protocole bande ultralarge, ou un protocole ZigBee^{™}, et/ou dans lequel ledit premier protocole de communication est un protocole de réseau local sans fil ou un protocole de téléphonie cellulaire.

8. Un procédé pour identifier et localiser un utilisateur actuel (100, 110, 120, 130) d'un dispositif de communication mobile (104), le procédé comportant :
obtenir des informations d'identification concernant ledit utilisateur actuel (100, 110, 120, 130) sur une première liaison de communication sans fil à partir d'un lecteur de carte intelligente (102) couplé à une carte intelligente (106, 116, 126, 136) qui stocke des données d'identification dudit utilisateur actuel (100, 110, 120, 130) ; et
transmettre lesdites informations d'identification et informations de localisation concernant ledit dispositif (104) à un serveur (142) sur une liaison de communication, dont au moins une portion est une deuxième liaison de communication sans fil.

9. Le procédé de la revendication 8, comportant de plus :
calculer lesdites informations de localisation à l'aide de signaux de système mondial de positionnement reçus par ledit dispositif (104), et/ou
signer numériquement lesdites informations de localisation avant de les transmettre à l'aide d'un certificat stocké sur ladite carte intelligente (106, 116, 126, 136), et signer numériquement lesdites informations d'identification avant de les transmettre à l'aide dudit certificat.

10. Un produit de programme informatique comportant un support lisible par ordinateur (422) agencé afin de stocker un moyen de code exécutable (423) qui, quand il est exécuté par un processeur (420) d'un dispositif de communication mobile (104), implémente le procédé de la revendication 8 ou de la revendication 9.
